# EUROPÄISCHE PATENTSCHRIFT

(11) **EP 4 256 210 B1**
(45) Veröffentlichungstag und Bekanntmachung des Hinweises auf die Patenterteilung: **11.06.2025**
(21) Anmeldenummer: 21839391.6
(22) Anmeldetag: 13.12.2021
(51) Int. Cl.: F16B 43/00

(54) **UNTERLEGSCHEIBE ZUR ABDECKUNG VON LANGLÖCHERN**
WASHER FOR COVERING SLOTS
RONDELLE DE RECOUVREMENT DE FENTES

(30) Priorität: 01.02.2021 DE 102021200853
(43) Veröffentlichungstag der Anmeldung: 11.10.2023
(73) Patentinhaber: Siemens Mobility GmbH, 81739 München (DE)
(72) Erfinder: BLETH, Sebastian, 80995 München (DE); MELDE, Jörg, 82140 Olching (DE); PFORR, Jörg, 85665 Moosach (DE)
(74) Vertreter: Siemens Patent Attorneys
(86) Internationale Anmeldenummer: PCT/EP2021/085461
(87) Internationale Veröffentlichungsnummer: WO 2022/161686

(56) Entgegenhaltungen:
- DE-A1- 2 901 322
- US-A- 5 024 585
- US-A1- 2007 104 556

## Beschreibung

Die Erfindung betrifft eine Unterlegscheibe zur Abdeckung von Langlöchern, insbesondere eine asymmetrische, längliche bzw. ovale Scheibe zur (vollständigen) Abdeckung von Langlöchern. Die Erfindung betrifft darüber hinaus ein Verfahren zur Abdeckung von Langlöchern mit einer solchen Unterlegscheibe sowie eine Montagebaugruppe, insbesondere eine Metallkonstruktion, bei der Langlöcher mittels eines solchen Verfahrens abgedeckt worden sind.

Für den Toleranzausgleich in Montagebaugruppen werden oftmals Langlöcher verwendet. Dies bietet bei Verschraubungen oder Vernietungen den Vorteil, dass Werkstücke eine geringere Herstellungsgenauigkeit aufweisen müssen bzw. Verformungen, z.B**.** durch Wärme, bei der Konstruktion ausgeglichen werden können.

Je nach Länge des Langlochs kann jedoch das Problem auftreten, dass dieses durch genormte Unterlegscheiben nicht vollständig abgedeckt werden kann. Dies stellt nicht nur einen optischen Makel dar, sondern hat zudem den technischen Nachteil, dass eine erhöhte Flächenpressung auftreten kann.

Symmetrisch ausgeführte Spezialscheiben müssen verhältnismä-βig groß sein, um ein langes Langloch vollständig abzudecken, und bedürfen daher eines entsprechen großen Einbauraumes. So kann eine gebräuchliche Unterlegscheibe gemäß der Norm ISO 7089 (Außendurchmesser ist ca. doppelter Schraubendurchmesser) nur relativ kurze Langlöcher abdecken, deren Länge nicht mehr als das 1,5-fache der Breite beträgt. Betrachtet man eine Unterlegscheibe der Norm ISO 7093 (Außendurchmesser ist ca. dreifacher Schraubendurchmesser), so dürfte das Langloch nicht länger als das doppelte seiner Breite sein.

Bisher wurden entsprechend große Langlöcher entweder nicht vollständig abgedeckt oder es wurden sehr große Scheiben mit entsprechend großem Platzbedarf eingesetzt.

DE 2901322 A1 beschreibt eine Abdeckscheibe für ein Langloch in einem Bauteil, mit einem runden Loch für den Durchtritt eines das Langloch durchsetzenden Schraubbolzens, dadurch gekennzeichnet, dass sie eine längliche Form hat und das Loch in Längsrichtung exzentrisch angeordnet ist.

US 5,024 85 A befasst sich mit einem Gehäusekopplungsmechanismus mit einem ersten Gehäuse dessen erstes Ende an einem zweiten Gehäuse anliegt. Das erste Gehäuse umfasst eine Vielzahl von Schlitzen, die um den Gehäuseumfang und in einem Abstand zueinander verlaufen und vom ersten Ende des Gehäuses angeordnet sind. Das zweite Gehäuse umfasst eine Vielzahl von Vorsprüngen, wobei jeder Vorsprung zum Ankoppeln eines Befestigungsmittels konfiguriert ist. Jedes Befestigungsmittel umfasst eine Schraube oder einen Gewindeschaft und eine zugehörige Platte, die so positioniert werden kann, dass sie mit einem der Schlitze im ersten Gehäuse in Eingriff steht.

US 2007/104556 A1 offenbart eine Befestigungsanordnung, die für die Anpassung zwischen mindestens zwei Elementen geeignet ist. Eine Schraube umfasst einen Kopf, einen Schaft, der sich axial vom Kopf erstreckt, und einen Gewindeabschnitt, der sich axial vom Schaft erstreckt. Eine erste Nockenscheibe ist drehfest am Schaft des Bolzens in einer Position befestigt, die in Bezug auf den Kopf des Bolzens benachbart ist. Eine zweite Nockenscheibe ist drehfest am Schaft des Bolzens in einer Position befestigt, die in Bezug auf den Gewindeabschnitt des Bolzens benachbart ist. Ein Gewindeabschnitt einer Mutter wird auf den Gewindeabschnitt des Bolzens aufgeschraubt, und ein Mantelabschnitt der Mutter verschiebt die zweite Nockenscheibe, wenn die Mutter auf den Bolzen festgezogen wird.

Es ist eine Aufgabe der vorliegenden Erfindung, eine alternative, komfortablere Unterlegscheibe sowie ein Verfahren zur Verwendung einer solchen Unterlegscheibe anzugeben, mit der die oben beschriebenen Nachteile vermieden werden.

Diese Aufgabe wird durch eine Unterlegscheibe nach Patentanspruch 1, ein Verfahren nach Patentanspruch 8 sowie eine Montagebaugruppe gemäß Patentanspruch 10 gelöst.

Eine erfindungsgemäße Unterlegscheibe zur Abdeckung von Langlöchern umfasst einen Scheibenkörper und eine Bohrung in dem Scheibenkörper, wobei die Bohrung asymmetrisch im Scheibenkörper bezüglich einer Drehung auf dem Scheibenkörper um dessen Mittelpunkt angeordnet ist. Dies bedeutet, dass das Zentrum der Bohrung neben dem Mittelpunkt der Unterlegscheibe liegt. Im Falle einer runden Bohrung ist diese also exzentrisch auf der Unterlegscheibe angeordnet, im Falle eines Langlochs als Bohrung liegt das Zentrum des Langlochs neben dem Mittelpunkt der Unterlegscheibe. Der Mittelpunkt der Unterlegscheibe liegt dabei noch im Bereich der Bohrung (nur nicht in deren Zentrum). Die Asymmetrie ist selbstverständlich nicht mikroskopisch klein, sondern größer als eine Fertigungstoleranz.

Ein erfindungsgemäßes Verfahren zur Abdeckung eines Langlochs in einem Bauteil mittels einer erfindungsgemäßen Unterlegscheibe umfasst die folgenden Schritte:
- Platzieren der Unterlegscheibe über dem Langloch und Einführen eines zylindrischen Befestigungselements (bevorzugt einer Schraube oder einem Niet) durch die Bohrung der Unterlegscheibe und durch das Langloch. Dabei kann das Befestigungselement zuerst durch die Unterlegscheibe geschoben werden und diese Gruppe dann über dem Langloch positioniert werden oder die Unterlegscheibe auf das Langloch gelegt werden und das Befestigungselement durch die Bohrung und das Langloch geschoben werden.
- Ausrichten des Befestigungselements im Langloch in eine vorbestimmte Befestigungsposition.

Diese Befestigungsposition hängt von der Art der Konstruktion ab, zu der diese Langloch dient. Bei einer Konstruktion wird sich das Befestigungselement an einer Stelle des Langlochs befinden, die durch die Konstruktion bzw. die zu verbindenden Teile vorgegeben ist. Daher existiert eine "vorbestimmte Befestigungsposition".
- Ausrichtung der Unterlegscheibe in eine Überdeckungsposition, bei der das Langloch vollflächig überdeckt ist, wobei dazu die Unterlegscheibe in dem Falle dass eine Überdeckung des Langlochs in einer Ausrichtung nicht möglich ist, um 180° um das Befestigungselement herum gedreht wird.

Die Unterlegscheibe wird nun so über dem Langloch bewegt, bis das Langloch vollflächig überdeckt ist. Dies kann auch dadurch geschehen, dass die Unterlegscheibe einfach um 180° um das Befestigungselement herum (also um die Flächennormale des Langlochs herum) gedreht wird. Wenn die Unterlegscheibe ein Langloch als Bohrung aufweist, dann kann zusätzlich noch eine Verschiebung der Unterlegscheibe entlang dieser langen Bohrung erfolgen.
- Befestigung des Befestigungselements, so dass die Unterlegscheibe in der Überdeckungsposition über dem Langloch verklemmt wird.

Nun wird das Befestigungselement mit der Unterlegscheibe ordnungsgemäß befestigt, also im Falle einer Schraube verschraubt und im Falle eines Niets vernietet.

Die Bohrung der Unterlegscheibe ist dabei bevorzugt ein Langloch und es wird bevorzugt zusätzlich eine weitere, insbesondere runde, Zusatz-Unterlegscheibe über der Bohrung der Unterlegscheibe so platziert, dass die Bohrung der Unterlegscheibe vollflächig abgedeckt ist.

Zu dem Verfahren ist zu beachten, dass es bei der Erfindung auf die Überdeckung des Langlochs ankommt. In der Regel werden jedoch zwei Bauelemente zusammengefügt, wobei eines dieser Bauelemente das Langloch aufweist. bei diesem Verfahren sollte also mitgelesen werden, dass zusätzlich ein weiteres Bauteil mit dem Befestigungselement an demjenigen Bauteil befestigt wird, in dem sich das Langloch befindet. Üblicherweise hat das weitere Bauteil ein rundes Loch, welches mit einer einfachen runden (Zusatz-)Unterlegscheibe nach dem Stand der Technik abgedeckt werden kann. Für den Fall, dass das weitere Bauteil auch ein Langloch aufweisen sollte, ist es selbstverständlich möglich, das hier vorgestellte Verfahren mit einer erfindungsgemäßen Unterlegscheibe auf jeder Seite der Verbindung, also eine erste Unterlegscheibe über dem ersten Langloch und eine zweite Unterlegscheibe über dem zweiten Langloch, entsprechend der Position des betreffenden Langlochs zu positionieren, dass beide Langlöcher vollflächig abgedeckt werden. Die Konstruktion sähe dann im Querschnitt wie folgt aus: Erste Unterlegscheibe, erstes Bauteil mit erstem Langloch, zweites Bauteil mit zweitem Langloch, zweite Unterlegscheibe.

Es ist klar, dass für Langlöcher mit viel zu großen Dimensionen und Unterlegscheiben mit viel zu kleinen Dimensionen das Verfahren nicht anwendbar ist. Auch ist klar, dass jedes Loch mit irgendeiner Unterlegscheibe abgedeckt werden kann, sofern diese nur groß genug ist. Jedoch können in der Praxis die meisten Langlöcher mit einer passenden erfindungsgemäßen Unterlegscheibe gut und mit einem minimalen Platzbedarf abgedeckt werden.

Eine erfindungsgemäße Montagebaugruppe ist bevorzugt eine Metallkonstruktion, besonders bevorzugt ein Schienenfahrzeug, z.B. eine Lok oder ein Eisenbahnwagen. Die Montagebaugruppe umfasst mindestens eine erfindungsgemäße Unterlegscheibe, wobei mindestens zwei Unterlegscheiben, nämlich mindestens eine auf jeder Seite eines Langlochs, besonders bevorzugt sind. Diese Unterlegscheibe deckt dabei bevorzugt ein Langloch der Montagebaugruppe ab, vorzugsweise vollflächig. Sie kann insbesondere mittels eines erfindungsgemäßen Verfahrens angebracht worden sein, was man dadurch in der Praxis bemerken kann, dass die Orientierungen der Unterlegscheiben sich nach ihrer Position über dem Langloch richtet. Eine solche Montagebaugruppe hat gegenüber dem Stand der Technik den Vorteil, dass neben einem vollkommenen Verschluss eines Langlochs und damit einem Schutz vor Umwelteinflüssen auch eine bessere mechanische Festigkeit gewährleistet ist, da sich der Druck eines Befestigungselements auf den gesamten Rand eines Langlochs geleitet werden kann.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Gemäß einer bevorzugten Ausführungsform ist die Bohrung der Unterlegscheibe als Langloch ausgeformt. Das Langloch hat eine Länge a und eine Breite b und es gilt a > b. Es ist dabei bevorzugt, dass das Langloch halbrunde Endbereiche aufweist, es kann aber theoretisch auch rechteckig (ggf. mit abgerundeten Ecken) sein. Für das Verhältnis von Länge a und Breite b gilt bevorzugt a/b ≤ 2, insbesondere a/b ≤ 1,5. Es ist bevorzugt, dass das Langloch spiegelsymmetrisch in der Unterlegscheibe angeordnet ist, bevorzugt auf deren Längsachse.

Die Breite der Bohrung in der Unterlegscheibe sollte der Breite des abzudeckenden Langlochs entsprechen und/oder dem Durchmesser des Befestigungselements, welches zur Befestigung dienen soll (etwas größer, damit das Befestigungselement durch die Bohrung hindurchgesteckt werden kann). Zwar ist das zu verdeckende Langloch nicht Teil der Erfindung, aber seine Abmessungen sind bekannt und es muss einfach nur eine Unterlegscheibe mit der passenden Größe verwendet werden.

Im Gegensatz zu einer rein runden Bohrung erlaubt ein Langloch als Bohrung in der Unterlegscheibe eine Verschiebung der Unterlegscheibe über einem Langloch in einem Bauteil entlang dem Schaft einer Schraube oder eines Niets. Dadurch ist eine effektivere Positionierung möglich als bei einer rein runden Bohrung und die Unterlegscheibe kann kleiner und damit platzsparender gestaltet sein.

Damit die Bohrung (in Form eines Langlochs) auf einfache Weise von einer runden (Zusatz-)Unterlegscheibe überdeckt werden kann, sollte dessen Länge a nicht mehr als das doppelte der Breite (also dem Durchmesser der Bohrung) betragen. Damit ist eine Abdeckung mit runden (Zusatz-)Unterlegscheiben der Norm ISO 7093 bei jeder Position eines Befestigungselements in der Bohrung möglich. Möchte man eine runde (Zusatz-)Unterlegscheibe der Norm ISO 7089 verwenden, sollte die Länge nicht mehr als 3/2 der Breite betragen.

Gemäß einer bevorzugten Ausführungsform ist die Unterlegscheibe länglich ausgeformt, so dass die Länge L der Unterlegscheibe größer als deren Breite B ist. Damit kann diese materialsparender hergestellt werden als eine runde (Zusatz-) Unterlegscheibe und ein Langloch platzsparender überdecken. Es sollte dazu beachtet werden, dass für eine effektive Überdeckung eines Langlochs mit der Breite y höchstens eine Randdicke der Unterlegscheibe von y auf jeder Seite des Langlochs benötigt wird (s. dazu ISO 7093 für den runden Fall), und oftmals eine Randdicke von y/2 (s. dazu ISO 7089 für den runden Fall). Betrachtet man eine Unterlegscheibe mit der Länge L und der Breite B so ist bevorzugt L > 1,5B bzw. bevorzugt L < 3B. Das obere Maß ist dabei nur genannt, da die meisten Langlöcher nicht übermäßig lang sind und man in dem bevorzugten Bereich der Dimensionierung der Unterlegscheibe in der Praxis fast alle normalen Langlöcher abdecken kann.

Gemäß einer bevorzugten Ausführungsform liegt die Bohrung der Unterlegscheibe im Wesentlichen auf einer Hälfte der Unterlegscheibe, aber in jedem Fall liegt mehr als 70% insbesondere mehr als 80% der Fläche der Bohrung (z.B. eines Langlochs) auf einer Hälfte der Unterlegscheibe. Es ist dabei erfindungsgemäß, dass ein Teil der Fläche der Bohrung in die andere Seite der Unterlegscheibe hineinragt. Bohrung ist so in der Unterlegscheibe positioniert, dass der Mittelpunkt (oder besser: der Durchstoßpunkt der mittleren Längsachse) einer zur Bohrung passgenauen Schraube in jeder Position in der Bohrung jenseits des Mittelpunktes auf der Seite der Unterlegscheibe liegt, auf der sich die größte Fläche der Bohrung befindet. Die Bohrung ragt also im Hinblick auf ihre Längsachse nicht mehr als die Hälfte der Breite der Bohrung in die andere Hälfte hinein. Dies bedeutet z.B. für ein Langloch mit halbkreisförmigen Endbereichen mit dem Radius b/2, dass die als Langloch ausgeführte Bohrung nicht mehr als b/2 in die andere Hälfte der Unterlegscheibe hineinragt (bevorzugt weniger). Mit einer solchermaßen angeordneten Bohrung lässt sich eine Unterlegscheibe sehr klein im Verhältnis zu einem Langloch in einem Bauteil ausgestalten und trotzdem das gesamte Langloch abdecken, da die Unterlegscheibe, wie oben im Rahmen des Verfahrens angedeutet wurde, über dem Langloch um 180° gedreht werden kann, um bei jeder Position einer Schraube im Langloch dieses effektiv abzudecken.

Gemäß einer bevorzugten Ausführungsform liegt die Längsachse der Bohrung mit der Länge a (die Bohrung hat wieder die Breite b) auf einer Längsachse der Unterlegscheibe mit der Länge L**.** Dies bedeutet, dass bei einer länglichen Unterlegscheibe die Bohrung spiegelsymmetrisch zur Längsachse angeordnet ist. Durch die asymmetrische Anordnung der Bohrung (bezüglich dem Mittelpunkt der Unterlegscheibe, also drehsymmetrische Asymmetrie wie oben gefordert) weist die Unterlegscheibe auf der einen Seite der Bohrung eine kürzere Randdicke mit der Länge d und an der gegenüberliegenden Seite der Bohrung eine längere Randdicke mit der Länge c auf dieser Längsachse auf. Es soll dabei bevorzugt gelten c > 1,5 d. Dies bedeutet, wenn eine runde Bohrung so dimensioniert ist, dass sie die Breite 2d hat (also der dünnere Rand der Unterlegscheibe mindestens den halben Bohrungsdurchmesser beträgt, ähnlich wie bei einer ISO 7089 Scheibe, was zu c > 3d führen würde), dann würde die Bohrung weniger als die Hälfte über die Mitte der Unterlegscheibe ragen, z.B. mit einem Viertel ihres Durchmessers. Eine Bohrung, die als Langloch mit der Länge a=c und der Breite b=2d ausgestaltet wäre, würde mit b/2 über die Hälfte der Unterlegscheibe hinüberragen.

Gemäß einer bevorzugten Ausführungsform, welche von einer vorangehenden Anordnung der Bohrung und den Größen a, b (Länge und Breite der Bohrung) und c, d (Breite der Ränder der Unterlegscheibe) ausgeht, hat der innere Rand der Bohrung, welcher der längeren Randdicke c zugewandt ist, einen Abstand größer als 0,4(d-b) und/oder kleiner als 0,6(d-b), bevorzugt von (d-b)/2, zum Mittelpunkt der Unterlegscheibe. Dies bedeutet, dass der Rand der Bohrung durchaus in die andere Hälfte hineinragen kann (wenn b>d) aber auch die gesamte Bohrung jenseits der Mittellinie der Unterlegscheibe liegen kann (wenn d>b). Für die meisten Langlöcher ist b>d bevorzugt, da dies eine sehr kompakte Bauweise der Unterlegscheibe ergibt und sich durchaus sehr viele Langlöcher damit abdecken lassen.

Gemäß einer bevorzugten Ausführungsform, welche von einer vorangehenden Anordnung der Bohrung und den Größen a, b (Länge und Breite der Bohrung) und c, d (Breite der Ränder der Unterlegscheibe) ausgeht, gilt für die Länge c der längeren Randdicke: c ≥ a-b+2d. Dies führt zu einer bevorzugten Unterlegscheibe mit einer Länge L (L=a+c+d, wenn die Bohrung auf der Längsachse liegt), die sehr vorteilhaft gestaltet ist und viele Langlöcher mit einem minimalen Materialaufwand (bei einer geeigneten Breite der Unterlegscheibe) abdecken kann.

Mit einer länglichen Unterlegscheibe und einer (bezüglich einer Drehung) asymmetrischen Ausführung mit einem relativ kurzen Langloch als Bohrung (z.B. vollständig abdeckbar mit einer Scheibe gemäß ISO 7089 oder ISO 7093) ist eine vollständige Abdeckung von Langlöchern bei jeder Toleranzlage möglich. Die Größe der Unterlegscheibe und damit ihr Platzbedarf kann dabei auf ein Minimum reduziert werden. Je nach Bedarf kann die Einbauposition der Scheibe durch Drehen oder Verschieben variiert werden.

Hierzu sei aber wieder angemerkt, dass bei übermäßig langen Langlöchern eine entsprechende Dimensionierung der Unterlegscheibe gewählt werden sollte. Es sollten dabei generell bei einer Bohrung mit der Länge a und der Breite b die Randdicken auf der Längsachse (Längen c und d) so gewählt werden, dass c > 2d (oder besser c > a-b+2d). Zur Überdeckung eines Langlochs der Länge x sollten d > x/2-a+b und c > x-a+b gewählt werden.

Ein Vorteil der Erfindung ist also, dass ein Langloch in jeder Toleranzlage vollständig abgedeckt und die Abmessungen der Scheibe dennoch auf ein Minimum reduziert werden kann. Dies verbessert sowohl die Flächenpressung als auch die Optik.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine bevorzugte Unterlegscheibe, die ein Langloch abdeckt, in perspektivischer Aufsicht,
Figur 2 mehrere Positionen einer bevorzugten Unterlegscheibe über einem Langloch,
Figur 3 die Dimensionen einer bevorzugten Unterlegscheibe,
Figur 4 und Figur 5 die Abdeckung eines kurzen Langlochs mit runden Unterlegscheiben gemäß dem Stand der Technik,
Figur 6 ein Beispiel für eine einfache Montagebaugruppe in einer perspektivischen Ansicht.

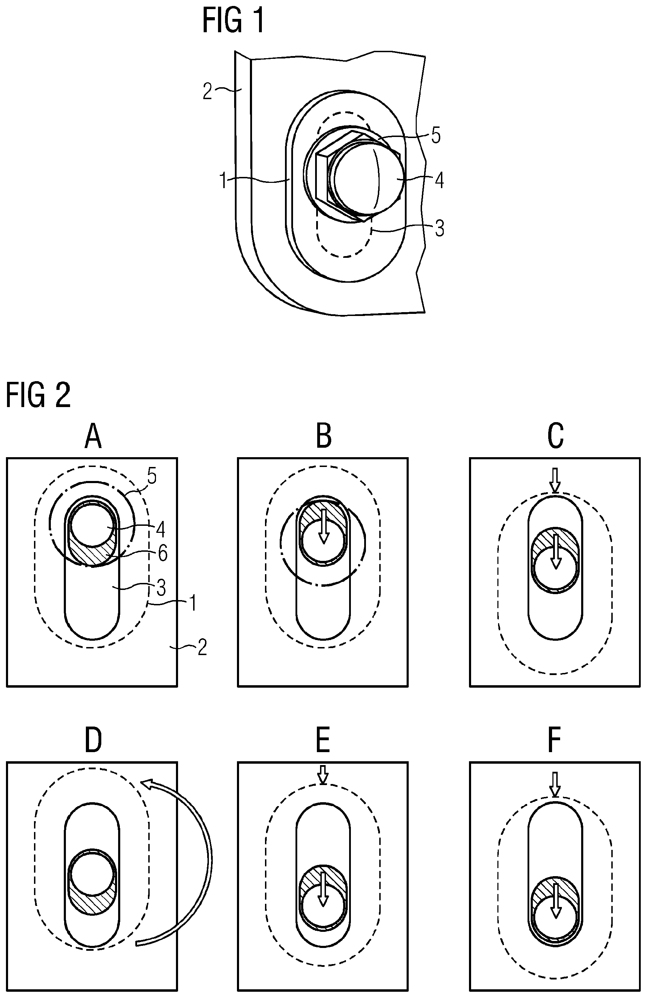

Figur 1 zeigt eine perspektivische Darstellung einer bevorzugten Unterlegscheibe 1 gemäß der Erfindung, die ein Langloch 3 in einem Bauteil 2 abdeckt. Das Langloch 3 wird dabei vollflächig überdeckt und ist daher gestrichelt angedeutet. Auch wenn klar ist, dass in der Regel zwei Bauteile 2 miteinander mittels der hier eingezeichneten Schraube 4 als Befestigungselement 4 verbunden werden sollen, ist hier nur ein Bauteil 2 eingezeichnet (das andere könnte auch einfach perspektivisch verdeckt sein). In der perspektivischen Aufsicht sind nur die Schraube 4, die bevorzugte Unterlegscheibe 1, eine normale runde Zusatz-Unterlegscheibe 5 und das Bauteil 2 zu sehen.

Figur 2 zeigt mehrere Positionen einer bevorzugten Unterlegscheibe 1 über einem Langloch 3, wie sie z.B. mittels des erfindungsgemäßen Verfahrens positioniert werden könnte. Die Sicht ist nun von der anderen Seite wie die in Figur 1 dargestellte, also von Seiten eines Bauteils 2. man sieht den Schaft der Schraube 4 und das Langloch 3. Die Unterlegscheibe 1 ist hier teilweise vom Bauteil verdeckt und nur durch das Langloch 3 sichtbar. Daher ist der Umriss der Unterlegscheibe 1 hier gestrichelt dargestellt. Es ist aber die Bohrung 6 in der Unterlegscheibe 1 zu sehen, die hier als ein kurzes Langloch ausgeformt ist, so dass es mittels einer runden Zusatz-Unterlegscheibe 5 (von Bauteil und Unterlegscheibe gemäß der Erfindung verdeckt, strichpunktiert in den Abbildungen A und B angedeutet) vollflächig überdeckt werden kann.

In Abbildung A befindet sich eine Schraube 4 am obersten Ende des Langlochs 3. Hier wie auch in den anderen Abbildungen überdeckt die Unterlegscheibe 1 das Langloch 3 vollflächig. Die Bohrung 6 wird vollflächig durch die runde Zusatz-Unterlegscheibe 5 überdeckt.

In Abbildung B befindet sich eine Schraube 4 in der oberen Hälfte des Langlochs 3. Die Unterlegscheibe 1 muss dazu nicht unbedingt gegenüber Abbildung A bewegt werden, da die Bohrung 6 diese Position der Schraube 4 noch zulässt. Die Bohrung 6 wird auch in dieser Position der Schraube 4 vollflächig durch die runde Zusatz-Unterlegscheibe 5 überdeckt. Dies gilt auch für die folgenden Abbildungen, bei denen die runde Zusatz-Unterlegscheibe 5 stets die Bohrung 6 überdeckt, aber dort nicht mehr eingezeichnet ist.

In Abbildung C befindet sich eine Schraube 4 in der Mitte des Langlochs 3. Die Unterlegscheibe 1 muss dazu etwas nach unten verschoben werden, um das Langloch 3 vollflächig zu überdecken.

In Abbildung D befindet sich eine Schraube 4 in der Mitte des Langlochs 3. Die Unterlegscheibe 1 wurde hier ausgehend von Abbildung C um 180° um die Schraube 4 gedreht.

In Abbildung E befindet sich eine Schraube 4 in der unteren Hälfte des Langlochs 3. Die Unterlegscheibe 1 wurde dazu etwas nach unten verschoben.

In Abbildung F befindet sich eine Schraube 4 am untersten Ende des Langlochs 3. Auch hier überdeckt die Unterlegscheibe 1 das Langloch 3 vollflächig wie in Abbildung A nur um 180° gedreht.

Man sieht, dass in jeder Position der Schraube 4 im Langloch 3 dieses von der Unterlegscheibe 1 vollflächig überdeckt werden kann.

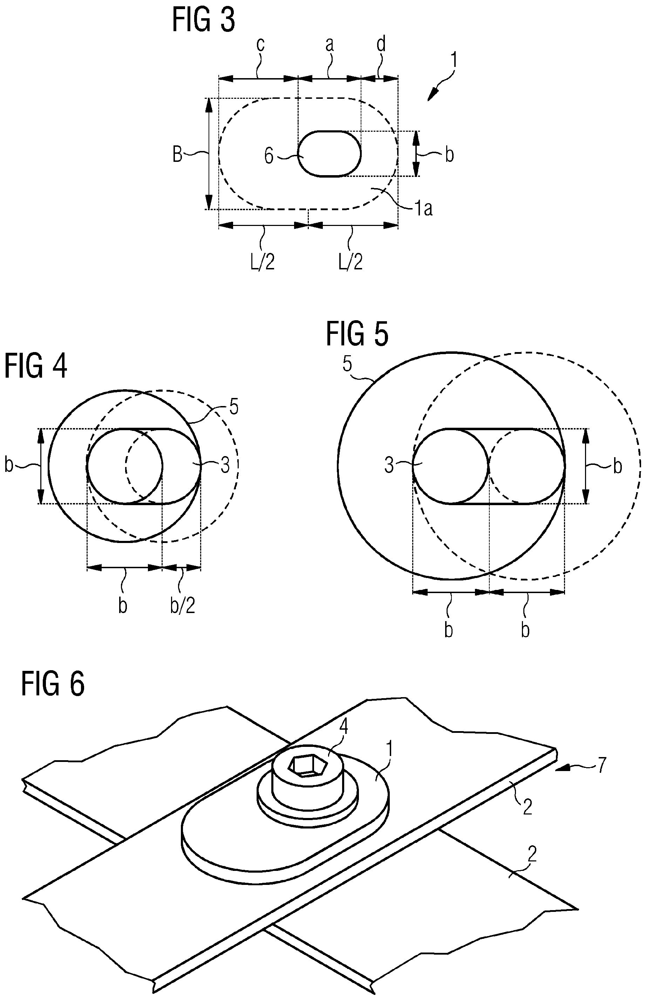

Figur 3 zeigt die Dimensionen einer bevorzugten Unterlegscheibe 1 mit einem Scheibenkörper 1a und einer länglichen Bohrung 6 in dem Scheibenkörper 1a. Diese Bohrung 6 ist asymmetrisch im Scheibenkörper 1a bezüglich einer Drehung auf dem Scheibenkörper um dessen Mittelpunkt angeordnet. Zudem ist die Bohrung 6 hier als Langloch ausgeformt mit einer Länge a und einer Breite b ist mit a/b ungefähr 1,4. Die Unterlegscheibe 1 selber ist ebenfalls länglich ausgeformt, wobei das Verhältnis zwischen deren Länge L und deren Breite B (L/B) gleich 1,6 ist.

Die Bohrung 6 liegt im Wesentlichen auf einer Hälfte der Unterlegscheibe 1 (gestrichelt angedeutet), ragt wie zu sehen aber nicht mehr als die Hälfte der Breite b der Bohrung in die andere Hälfte hinein, sondern nur ca. b/4. Die Längsachse der Bohrung 6 (hier die Achse mit der Bezeichnung a) mit der Länge a liegt auf der Längsachse der Unterlegscheibe 1 mit der Länge L (durchgehende Linie). Durch die asymmetrische Anordnung der Bohrung 6 ergibt sich auf der Unterlegscheibe 1 eine kürzere Randdicke der mit der Länge d und eine längere Randdicke mit der Länge c, wobei c ungefähr 2,1d entspricht. Der innere Rand der Bohrung 6 (hier der linke Rand), welcher der längeren Randdicke zugewandt ist, hat mit b > d einen Abstand größer als (d-b)/2, zum Mittelpunkt der Unterlegscheibe 1 (nach links da d-b<0). Für die Länge c der längeren Randdicke gilt in diesem Beispiel c ≥ a-b+2d.

Figur 4 und Figur 5 zeigen die Abdeckung eines kurzen Langlochs 3 mit runden Zusatz-Unterlegscheiben 5 gemäß dem Stand der Technik. Links ist in Figur 4 eine Zusatz-Unterlegscheibe 5 nach der Norm ISO 7089 skizziert mit einem Außendurchmesser, der ca. dem doppelten des Durchmessers der Bohrung entspricht. Rechts ist in Figur 5 eine Zusatz-Unterlegscheibe 5 nach der Norm ISO 7093 skizziert mit einem Außendurchmesser, der dem dreifachen des Durchmessers der Bohrung entspricht.

Die Zusatz-Unterlegscheiben 5 sind einmal mit einer soliden und einmal mit einer gestrichelten Linie angedeutet. Dies sind die beiden äußersten Positionen, welche die Zusatz-Unterlegscheiben 5 annehmen können, um das jeweilige Langloch 3 komplett abzudecken. Das Langloch 3 darf dazu links nicht länger als das eineinhalbfache des Bohrungsdurchmessers b sein und rechts nicht länger als das doppelte des Bohrungsdurchmessers b. Im Hinblick auf die Erfindung ist das Langloch 3 eine längliche Bohrung 6 in einer erfindungsgemäßen Unterlegscheibe 1.

Figur 6 zeigt ein Beispiel für eine einfache Montagebaugruppe 7 in einer perspektivischen Ansicht. Die Montagebaugruppe 7 ist bevorzugt eine Metallkonstruktion und kann um ein vielfaches komplexer sein als dargestellt, z.B. ein Metallturm oder ein Schienenfahrzeug. Die Montagebaugruppe 7 umfasst wie zu sehen mindestens eine erfindungsgemäße Unterlegscheibe 1, welche bevorzugt ein Langloch 3 der Montagebaugruppe 7 vollflächig abdeckt (hier daher nicht zu sehen). Zur Konstruktion ist ein erfindungsgemäßes Verfahren bevorzugt. Es wird abschließend noch einmal darauf hingewiesen, dass es sich bei den vorhergehend detailliert beschriebenen Unterlegscheiben sowie bei dem Verfahren lediglich um Ausführungsbeispiele handelt, welche vom Fachmann in verschiedenster Weise modifiziert werden können, ohne den durch die Patentansprüche bestimmten Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schlie-βen Begriffe wie "Einheit" nicht aus, dass die betreffenden Komponenten aus mehreren zusammenwirkenden Teil-Komponenten bestehen, die gegebenenfalls auch räumlich verteilt sein können.

## Patentansprüche

1. Unterlegscheibe (1) zur Abdeckung von Langlöchern (3) umfassend einen Scheibenkörper (1a) und eine Bohrung (6) in dem Scheibenkörper (1a), wobei die Bohrung (6) asymmetrisch im Scheibenkörper (1a) bezüglich einer Drehung auf dem Scheibenkörper (1a) um dessen Mittelpunkt angeordnet ist, **dadurch gekennzeichnet, dass** die Bohrung (6) zu mehr als 70% auf einer Hälfte der Unterlegscheibe (1) liegt und ein Teil der Fläche der Bohrung in die andere Seite der Unterlegscheibe (1) hineinragt, wobei die Bohrung (6) so in der Unterlegscheibe (1) positioniert ist, dass sie im Hinblick auf ihre Längsachse nicht mehr als die Hälfte der Breite der Bohrung (6) in die andere Hälfte hineinragt.

2. Unterlegscheibe nach Anspruch 1, wobei die Bohrung (6) als Langloch ausgeformt ist, dessen Länge a und dessen Breite b ist mit a > b, insbesondere mit halbrunden Endbereichen, wobei bevorzugt a/b ≤ 2, insbesondere a/b ≤ 1,5, wobei eine Längsachse der Bohrung (6) mit der Länge a und der Breite b auf einer Längsachse der Unterlegscheibe (1) mit der Länge L liegt und durch die asymmetrische Anordnung der Bohrung (6) eine kürzere Randdicke der Unterlegscheibe (1) mit der Länge d und eine längere Randdicke der Unterlegscheibe (1) mit der Länge c auf dieser Längsachse vorliegen, wobei c > 1,5 d.

3. Unterlegscheibe nach einem der vorangehenden Ansprüche, welche länglich ausgeformt ist, so dass die Länge L der Unterlegscheibe (1) größer als deren Breite B ist.

4. Unterlegscheibe nach Anspruch 3, wobei bevorzugt L > 1,5B und/oder bevorzugt L < 3B.

5. Unterlegscheibe nach einem der vorangehenden Ansprüche, wobei die Bohrung (6) im Wesentlichen auf einer Hälfte der Unterlegscheibe (1) liegt und der Mittelpunkt der Unterlegscheibe (1) im Bereich der Bohrung (6) liegt.

6. Unterlegscheibe nach einem der Ansprüche 2 bis 5, wobei der innere Rand der Bohrung (6), welcher der längeren Randdicke c zugewandt ist, einen Abstand größer als 0,4(d-b) und kleiner als 0,6(d-b), bevorzugt von (d-b)/2, zum Mittelpunkt der Unterlegscheibe (1) hat.

7. Unterlegscheibe nach einem der Ansprüche 2 bis 6, wobei für die Länge c der längeren Randdicke gilt: c ≥ a-b+2d.

8. Verfahren zur Abdeckung eines Langlochs (3) in einem Bauteil (2) mittels einer Unterlegscheibe (1) gemäß einem der vorangehenden Ansprüche, umfassend die Schritte:
- Platzieren der Unterlegscheibe (1) über dem Langloch (3) und Einführen eines zylindrischen Befestigungselements (4) durch die Bohrung (6) der Unterlegscheibe (1) und durch das Langloch (3),
- Ausrichten des Befestigungselements (4) im Langloch (3) in eine vorbestimmte Befestigungsposition,
- Ausrichten der Unterlegscheibe (1) in eine Überdeckungsposition, bei der das Langloch (3) vollflächig überdeckt ist, wobei dazu die Unterlegscheibe (1) in dem Falle, dass eine Überdeckung des Langlochs (3) in einer Ausrichtung nicht möglich ist, um 180° um das Befestigungselement (4) herum gedreht wird,
- Befestigen des Befestigungselements (4), so dass die Unterlegscheibe (1) in der Überdeckungsposition über dem Langloch (3) verklemmt wird.

9. Verfahren nach Anspruch 8, wobei die Bohrung (6) der Unterlegscheibe (1) ein Langloch ist und zusätzlich eine weitere, insbesondere runde, Zusatz-Unterlegscheibe (5) über der Bohrung (6) der Unterlegscheibe (1) so platziert wird, dass die Bohrung (6) der Unterlegscheibe (1) vollflächig abgedeckt ist.

10. Montagebaugruppe (7), bevorzugt eine Metallkonstruktion, besonders bevorzugt ein Schienenfahrzeug, umfassend mindestens eine Unterlegscheibe (1) gemäß einem der Ansprüche 1 bis 7, welche bevorzugt ein Langloch (3) der Montagebaugruppe (7) vollflächig abdeckt und insbesondere mittels eines Verfahrens gemäß einem der Ansprüche 8 oder 9 angebracht worden ist.

## Claims

1. Washer (1) for covering slots (3), comprising a disc body (1a) and a bore (6) in the disc body (1a), wherein the bore (6) is disposed in the disc body (1a) so as to be asymmetrical in terms of a rotation on the disc body (1a) about the centre of the latter, **characterized in that** the bore (6) by more than 70% lies on one half of the washer (1), and part of the area of the bore protrudes into the other side of the washer (1), wherein the bore (6) is positioned in the washer (1) in such a way that said bore (6) in terms of the longitudinal axis thereof does not protrude into the other half by more than half the width of the bore (6).

2. Washer according to Claim 1, wherein the bore (6) is shaped as a slot of which the length a and the width b are a > b, in particular having semicircular end regions, where preferably a/b ≤ 2, in particular a/b ≤ 1.5, wherein a longitudinal axis of the bore (6) with the length a and the width b lies on a longitudinal axis of the washer (1) with the length L, and as a result of the asymmetrical disposal of the bore (6) a shorter peripheral thickness of the washer (1) with the length d and a longer peripheral thickness of the washer (1) with the length c are present on this longitudinal axis, where c > 1.5 d.

3. Washer according to one of the preceding claims, which washer is shaped to elongate such that the length L of the washer (1) is greater than the width B of the latter.

4. Washer according to Claim 3, wherein preferably L > 1.5B and/or preferably L < 3B.

5. Washer according to one of the preceding claims, wherein the bore (6) lies substantially on one half of the washer (1) and the centre of the washer (1) lies in the region of the bore (6).

6. Washer according to one of Claims 2 to 5, wherein the inner periphery of the bore (6) that faces the longer peripheral thickness c has a spacing of more than 0.4(d-b) and less than 0.6(d-b), preferably of (d-b)/2, from the centre of the washer (1).

7. Washer according to one of Claims 2 to 6, where the length c of the longer peripheral thickness is c ≥ a-b+2d.

8. Method for covering a slot (3) in a component (2) by means of a washer (1) according to one of the preceding claims, comprising the following method steps:
- placing the washer (1) over the slot (3) and introducing a cylindrical fastening element (4) through the bore (6) of the washer (1) and through the slot (3);
- aligning the fastening element (4) in the slot (3) to a predetermined fastening position;
- aligning the washer (1) to an overlapping position in which the slot (3) is covered across the full area, wherein the washer (1), if an overlap with the slot (3) is not possible in one alignment, for this purpose is rotated by 180° about the fastening element (4);
- fastening the fastening element (4) so that the washer (1) is clamped in the overlapping position above the slot (3).

9. Method according to Claim 8, wherein the bore (6) of the washer (1) is a slot, and additionally a further, in particular round, supplementary washer (5) is placed over the bore (6) of the washer (1) so that the bore (6) of the washer (1) is covered across the full area.

10. Assembly module (7), preferably a metal construction, particularly preferably a rail vehicle, comprising at least one washer (1) according to one of Claims 1 to 7, which preferably covers a slot (3) of the assembly module (7) across the full area and has in particular been attached by means of a method according to one of Claims 8 and 9.

## Revendications

1. Rondelle (1) de recouvrement de fentes (3), comprenant un corps de rondelle (1a) et un alésage (6) dans le corps de rondelle (1a), dans laquelle l'alésage (6) est disposé de manière asymétrique dans le corps de rondelle (1a) par rapport à une rotation sur le corps de rondelle (1a) autour de son centre, **caractérisée en ce que** l'alésage (6) se trouve à plus de 70 % sur une moitié de la rondelle (1) et une partie de la surface de l'alésage fait saillie dans l'autre côté de la rondelle (1), dans lequel l'alésage (6) est positionné dans la rondelle (1) de sorte que, par rapport à son axe longitudinal, il fait saillie à raison de pas plus de la moitié de la largeur de l'alésage (6) dans l'autre moitié.

2. Rondelle selon la revendication 1, dans laquelle l'alésage (6) est formé comme une fente dont la longueur est a et la largeur est b, avec a > b, en particulier avec des régions d'extrémité semi-circulaires, dans laquelle, de préférence, a/b ≤ 2, en particulier a/b ≤ 1,5, dans laquelle un axe longitudinal de l'alésage (6) de longueur a et de largeur b se trouve sur un axe longitudinal de la rondelle (1) de longueur L et, en raison de la disposition asymétrique de l'alésage (6), il existe une épaisseur de bord plus courte de la rondelle (1) de longueur d et une épaisseur de bord plus longue de la rondelle (1) de longueur c sur cet axe longitudinal, dans laquelle c > 1,5 d.

3. Rondelle selon l'une des revendications précédentes, qui est formée longitudinalement de sorte que la longueur L de la rondelle (1) est supérieure à sa largeur B.

4. Rondelle selon la revendication 3, dans laquelle, de préférence, L > 1,5B et/ou de préférence L < 3B.

5. Rondelle selon l'une des revendications précédentes, dans laquelle l'alésage (6) se trouve sensiblement sur une moitié de la rondelle (1) et le centre de la rondelle (1) se trouve dans la région de l'alésage (6).

6. Rondelle selon l'une des revendications 2 à 5, dans laquelle le bord intérieur de l'alésage (6), qui fait face à l'épaisseur de bord la plus longue c, présente une distance supérieure à 0,4(d-b) et inférieure à 0,6(d-b), de préférence de (d-b)/2, par rapport au centre de la rondelle (1).

7. Rondelle selon l'une des revendications 2 à 6, dans laquelle la longueur c de l'épaisseur du bord le plus long est : c ≥ a-b+2d.

8. Procédé de recouvrement d'une fente (3) dans un composant (2) au moyen d'une rondelle (1) selon l'une des revendications précédentes, comprenant les étapes :
- de placement de la rondelle (1) sur la fente (3) et d'insertion d'un élément de fixation cylindrique (4) à travers l'alésage (6) de la rondelle (1) et à travers la fente (3),
- d'alignement de l'élément de fixation (4) dans la fente (3) dans une position de fixation prédéterminée,
- d'alignement de la rondelle (1) dans une position de recouvrement dans laquelle la fente (3) est complètement recouverte, dans lequel la rondelle (1) est tournée de 180° autour de l'élément de fixation (4) dans le cas où il n'est pas possible de recouvrir la fente (3) dans un alignement,
- de fixation de l'élément de fixation (4) de sorte que la rondelle (1) est serrée en position de recouvrement au-dessus de la fente (3).

9. Procédé selon la revendication 8, dans lequel l'alésage (6) de la rondelle (1) est une fente, et en outre, une autre rondelle supplémentaire (5), en particulier ronde, est placée sur l'alésage (6) de la rondelle (1) de sorte que l'alésage (6) de la rondelle (1) est complètement recouvert.

10. Ensemble de montage (7), de préférence une construction métallique, de manière particulièrement préférée un véhicule ferroviaire, comprenant au moins une rondelle (1) selon l'une des revendications 1 à 7, qui recouvre de préférence une fente (3) de l'ensemble de montage (7) sur toute sa surface et a été fixée en particulier au moyen d'un procédé selon l'une des revendications 8 ou 9.
